# EUROPEAN PATENT SPECIFICATION

(11) **EP 1 998 502 B1**
(45) Date of publication and mention of the grant of the patent: **27.03.2019**
(21) Application number: 08251852.3
(22) Date of filing: 28.05.2008
(51) Int. Cl.: H04L 12/40, H04L 12/46, H04L 12/28, H04B 3/54

(54) **Control channel for vehicle systems using the vehicle's power distribution system**
Steuerkanal für Fahrzeugsysteme unter Verwendung des Energieverteilungssystems des Fahrzeuges
Canal de contrôle dans des systèmes de véhicule utilisant le système de distribution d'alimentation du véhicule

(30) Priority: 30.05.2007 US 755386
(43) Date of publication of application: 03.12.2008
(73) Proprietor: The Boeing Company, Chicago, IL 60606-1596 (US)
(72) Inventor: Davis, Terry L., Issaquah Washington 98027 (US); Shetty, Sudhakar, Mercer Island Washington 98040 (US); von Doenhoff, Roger C., Federal Way Washington 98003 (US)
(74) Representative: Boult Wade Tennant LLP

(56) References cited:
- WO-A-03/036877
- WO-A-2006/075767
- US-A1- 2003 184 433

## Description

### BACKGROUND OF THE INVENTION

The present invention relates to vehicles, such as aircraft, aerospace vehicles and other vehicles, and controlling systems of such vehicles, and more particularly to a control channel for vehicle or aircraft systems using the vehicle's or aircraft's electrical power distribution system.

In controlling onboard aviation networked systems or other systems for operation of an aerospace vehicle, aircraft or other vehicle, a control channel for sending and receiving control signals, communications or other data is desired or in some applications may be required that is secure and not accessible via any offboard link. Separate wired control connections are one solution; however, the additional wiring can add significant weight to the aerospace vehicle and requires the installation of separate wiring for each system. The additional wiring also adds to the complexity of each of the systems increasing manufacturing, installation and maintenance costs. Reliability may also be reduced because of possible damage to or deterioration of the additional control wiring. A wireless solution while perhaps reducing some of the disadvantages of the wired solution has its own challenges and constraints due to spectrum and security risks

WO 2006/075767 describes a data transmission system where data transmitted over electrical wires for supplying power to a car.

### BRIEF SUMMARY OF THE INVENTION

Various aspects and embodiments of the invention are set out in the appended claims.

In accordance with an example, there is provided a system and method according to the accompanying claims. There is provided a control channel for controlling a system of a vehicle may include an electrical power distribution system for supplying electrical power to a plurality of different systems onboard the vehicle. The control channel may also include a first interface to convert a signal for controlling or communicating with a selected vehicle system of the plurality of different systems on board the vehicle into a format for insertion and transmission over a power line that also supplies electrical power to the selected vehicle system, wherein the power line forms a part of the electrical power distribution system of the vehicle. The control channel may further include a second interface to convert a signal received over the power line into a format for use by the selected vehicle system.

There is provided a system for transmitting electrical power and communications over an aerospace vehicle's electrical power system may include a first interface to convert a signal for controlling or communicating with a selected aerospace vehicle system of a plurality of different systems on board the aerospace vehicle into a format for insertion and transmission over a power line that also supplies electrical power to the selected aerospace vehicle system, wherein the power line forms a part of the electrical power distribution system of the aerospace vehicle. The system may also include a second interface to convert a signal received over the power line into a format for use by the selected aerospace vehicle system.

There is provided an aerospace vehicle that includes a plurality of vehicle systems for operation of the aerospace vehicle. The aerospace vehicle may also include an electrical power distribution system for supplying electrical power to each of the plurality of vehicle systems. The aerospace vehicle may further include a control channel associated with each vehicle system for controlling operation of each of the vehicle systems by sending control data signals to each of the vehicle systems over the electrical power distribution system that also supplies electrical power to each of the systems.

There is provided a method for transmitting electrical power and communications over an aerospace vehicle's electrical power system may include generating a signal for transmission to a selected aerospace vehicle system and converting the signal to a converted signal in a format for transmission over the aerospace vehicle's electrical power system. The method may also include inserting the converted signal on a power line of the electrical power system. The method may further include receiving the converted signal at the selected aerospace vehicle system via the power line.

Other aspects and features of the present invention, as defined solely by the claims, will become apparent to those ordinarily skilled in the art upon review of the following non-limited detailed description of the invention in conjunction with the accompanying figures.

### BRIEF DESCRIPTION OF THE SEVERAL VIEWS OF THE DRAWINGS

Figure 1 is a block diagram of an example of a system for transmitting electrical power and communications over a vehicle's electrical power distribution system in accordance with an embodiment of the present invention.
Figures 2 is a flow chart of an example of a method for transmitting electrical power and communications over a vehicle's electrical power distribution system in accordance with an embodiment of the present invention.
Figure 3 is an illustration of an aircraft including a system for transmitting electrical power and communications over an aircraft's electrical power distribution system in accordance with an embodiment of the present invention.

### DETAILED DESCRIPTION OF THE INVENTION

The following detailed description of embodiments refers to the accompanying drawings, which illustrate specific embodiments of the invention. Other embodiments having different structures and operations do not depart from the scope of the present invention.

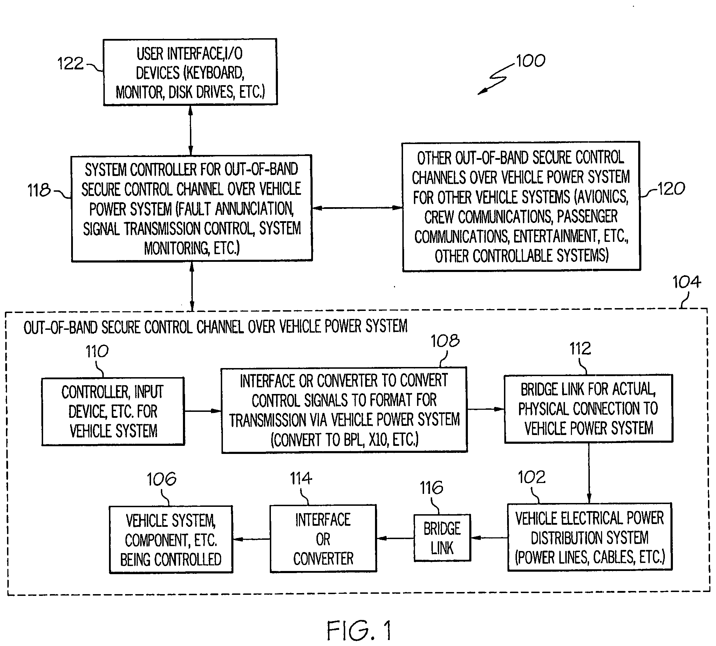

Figure 1 is a block diagram of an example of a system 100 for transmitting electrical power and communications or data over a vehicle's electrical power distribution system 102 in accordance with an embodiment of the present invention. The system 100 may include a control channel 104 associated with each vehicle system 106 or each component of a vehicle system for controlling operation of the vehicle system or component by sending communications, control data signals or the like over the vehicle's electrical power distribution system 102. The control channel 104 may provide out-of-band secure communications over the electrical power distribution system 102. Out-of-band may denote a channel that is completely separate from the channel used by the system for normal data communications. As described herein, the vehicle may be an aerospace vehicle or aircraft; however, the system 100 for transmitting communications, control data signals or the like over the vehicle's electrical power distribution system 102 may also be any other type of vehicle, such as terrestrial vehicle, watercraft or the like.

The control channel 104 may include an interface 108, converter or other device to convert control signals, communication signals or other data into a format for transmission via the vehicle's electrical power distribution system 102. The interface 108 may convert Ethernet data signaling or signals into one of Broadband over Power Line (BPL) type signals or signaling, X10 type signals or signaling, symmetrical hi-broadband BPL, automotive-style low-bandwidth power line communications (PLC) type signals or signaling, or a similar type signaling or message protocol for sending control signals or data over an electrical power line that also supplies electrical power to a system.

The control channel interface 108 may receive communications, control signals or data from a controller 110, input device, or component of a vehicle system with which the interface 108 is associated. A bridging link 112 may be associated with the interface 108 to actually, physically connect the interface 108 to the vehicle power distribution system 102.

A second interface 114 or converter may be associated with the vehicle system 106 or component of the vehicle system being controlled to convert the control signal received over a power line of the vehicle distribution system 102 to a format for use by the selected vehicle system 106 or component. Another bridging link 116 associated with the interface 114 may make the actual physical connection to the power line of the vehicle power distribution system 102.

In another embodiment of the present invention, the interfaces 108 and 114 may each be a bidirectional or two-way interface or converter that may be associated with each component of a vehicle system. The bidirectional interface may both convert signals to a format for insertion and transmission over the electrical power distribution system 102 and also convert signals received over the electrical power distribution system 102 to a format for use by the vehicle system 106 or component.

The interface 114 or bidirectional interface may be embedded in a power converter associated with each individual vehicle system 106 or system component.

The system 100 may also include an overall or master system controller 118 for out-of-band secure control channel communications via the vehicle's electrical power distribution system 102. The system controller 118 may perform functions including but not necessarily limited to fault detection and annunciation, signal transmission control, for example, stopping and starting data transmission, system monitoring and any other functions that may be appropriate for monitoring and controlling data or controlling communications over the electrical power system 102. The system controller 118 may control other out-of-band secure control channels 120 for other vehicle systems, such as avionics, passenger communications, and passenger entertainment and any other system that may need controlling.

The system 100 may also include a user interface 122. The user interface 122 may include input and output devices, such as a keyboard, monitor, disk drives and the like to permit a user to manage and maintain the system 100.

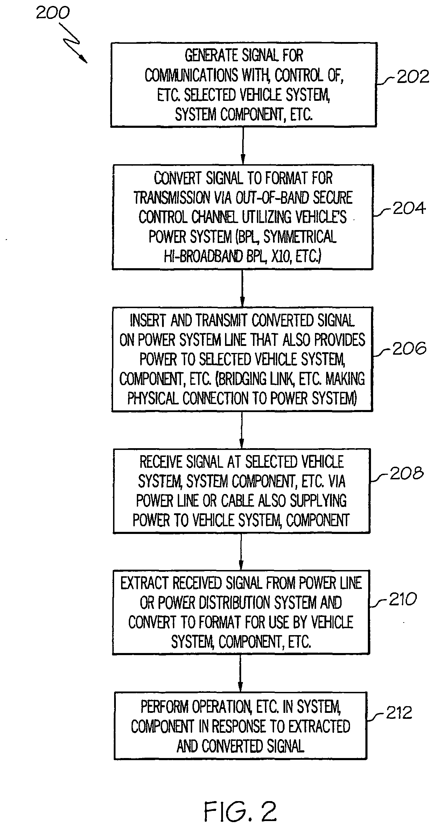

Figures 2 is a flow chart of an example of a method 200 for transmitting electrical power and communications over a vehicle's electrical power distribution system in accordance with an embodiment of the present invention. The method 200 may be embodied in the system 100 of Figure 1. In block or module 202, a signal may be generated for communication with or control of a selected vehicle system or component of the selected vehicle system.

In block or module 204, the signal may be converted to a format for transmission via an out-of-band secure control channel or as an out-of-band secure signal over the vehicle's electrical power distribution system. Similar to that previously described, the control signal or Ethernet data may be converted to BPL, symmetrical hi-broadband BPL, X10, automotive-style PLC or similar type signals or protocol for secure out-of-band transmission over the power distribution system of the vehicle.

In block 206, the converted signal may be inserted and transmitted on a power line or cable that also provides power to the selected vehicle system or component. A bridging link may make the actual physical connection to the power line or cable as previously described.

In block or module 208, the signal may be received at the selected system or system component via the power line or cable that is also supplying electrical power to the system or system component.

In block 210, the received signal may be extracted from the power line of the power distribution system and converted to a format for use by the vehicle system or component. The received signal may be converted back to Ethernet data or other signal from the BPL, symmetrical hi-broadband BPL, X10, automotive-style PLC or similar type signal.

In block 212, the operation or function may be performed by the selected vehicle system or system component in response to the extracted and converted signal.

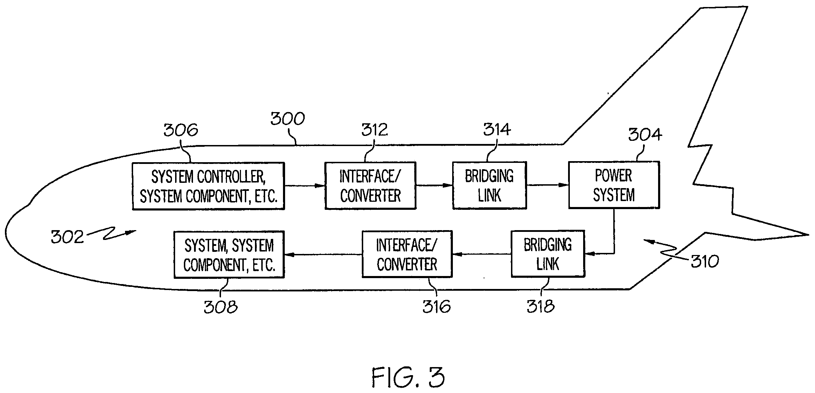

Figure 3 is an illustration of an aircraft 300 including a system 302 for transmitting electrical power and communications or data over an aircraft's electrical power distribution system 304 in accordance with an embodiment of the present invention. The system 302 may be similar to the system 100 of Figure 1 and may embody the method 200 of Figure 2. The system 302 may include a system controller 306 to generate signals for controlling operation of a selected aircraft system 308 via a control channel 310. In another embodiment of the present invention, the blocks 306 and 308 may be different components of an aircraft system that may communicate with one another via the control channel 310.

The control channel 310 may be an out-of-band secure control channel that operates at frequencies that prevent access via any links or means not associated with the aircraft 300. This prevents any unauthorized or inadvertent access to the aircraft's vital systems and provides a highly secure and reliable system in aircraft and airport environments. Whereas wireless gatelink services or similar wireless services may vary with the amount of radio frequency (RF) interference within the aircraft and wired solutions add weight and manufacturing complexity and cost.

The control channel 310 may include an interface 312 or converter to convert the communications signals or Ethernet data to a format for insertion and communications over the aircraft's electrical power system 304 similar to that previously described. A bridging link 314 may make the actual connection to the power line or cable of the power system 304.

A second interface 316 may be associated with the aircraft system 308 or component of the aircraft system 308. The second interface 316 may convert signals received from the aircraft power system 304 to a format for use by the aircraft system 308 or system component. A second bridging line 318 may couple the second or receiving interface 318 to the power line or cable of the aircraft's power system 304.

In accordance with an embodiment of the present invention, the interfaces 312 and 316 may each be bidirectional or two-way interfaces that may each be associated with a component of a selected vehicle system for bidirectional or two-way communications or data transfer between the components (blocks 306 and 308). The bidirectional interfaces may both convert signals to a format for insertion and transmission over the electrical power distribution system 304 of the aircraft and also convert signals received over the electrical power distribution system 304 for use by the system components. Similar to that previously described, the interfaces 312 and 316 may be adapted to convert signals to and from, hi-broadband BPL, X10, or automotive-style PLC type signals. With hi-broadband BPL, the potential exists, especially in limited distances, to reach communication speeds for aircraft applications above 200 megabits per second, which exceeds bandwidth requirements of out-of-band applications. Accordingly, the system 302 of the embodiment of the present invention will be highly secure and reliable in aircraft and airport environments. Whereas wireless gatelink services and similar communications means vary with the amount of radio frequency (RF) interference within the aircraft and wired solutions add weight and manufacturing complexity of the aircraft 300.

If the aircraft 300 is a passenger aircraft, the power distribution system 304 may supply electrical power and voice and data communications to each passenger seat. A first and second interface 312 and 316 or a bidirectional interface may be associated with each passenger seat for data and voice communications over the aircraft's power distribution system 304.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," and "includes" and/or "including" when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A control system (104, 310) for controlling a system (100, 302) of a vehicle (300), comprising:
an electrical power distribution system (102, 304) for supplying electrical power to a plurality of different systems onboard the vehicle;
a first interface (108, 312) to convert a signal for one of controlling or communicating with a selected vehicle system (110, 306) of the plurality of different systems onboard the vehicle into a format for insertion and transmission over a power line that also supplies electrical power to the selected vehicle system (106, 308), wherein the power line forms a part of the electrical power distribution system of the vehicle; and
a second interface (114, 316) to convert a signal received over the power line into a format for use by the selected vehicle system; wherein each of the first and second interfaces are adapted to provide the signal over an out-of-band control channel associated with the selected vehicle system that is separate to a communication channel; the control system **characterized by** further comprising:
a system controller (118) for out-of-band control channel communications via the electrical power distribution system, the system controller arranged to perform functions to control out-of-band control channel communications over the electrical power distribution system; wherein the out-of-band control channel operates at frequencies that prevent access via any links or means not associated with the vehicle.

2. The control system of claim 1, wherein the first interface is associated with a first component (110, 306) of the selected vehicle system and the second interface is associated with a second component (106, 308) of the selected vehicle system to permit communications between the first and second components of the selected vehicle system over the electrical power distribution system of the vehicle that also supplies electrical power to each of the components.

3. The control system of claim 1, wherein the first interface and the second interface form a single bidirectional interface and wherein the control channel further comprises a bidirectional interface associated with each component of the selected vehicle system, wherein the bidirectional interface is adapted to both convert signals to a format for insertion and transmission over the electrical power distribution system of the vehicle and to convert signals received over the electrical power distribution system of the vehicle for use by the component of the selected vehicle system.

4. The control system of claim 1, wherein the electrical power distribution system simultaneously supplies electrical power and control or communications signaling to the selected vehicle system.

5. The control system of claim 1, wherein the electrical power distribution system simultaneously supplies electrical power and control or communications signaling between components of the selected vehicle system.

6. The control system of claim 1, further comprising a bridging link (112, 314, 116, 318) associated with each interface to physically connect each interface (108, 312, 114, 316) to the electrical power distribution system.

7. The control system of claim 1, wherein the functions include:
fault detection and annunciation,
system monitoring; and
stopping and starting data transmission.

8. The control system of claim 1, further comprising a controller (110, 306) to control transmission of data over the electrical power distribution system.

9. The control system of claim 1, wherein the first interface converts Ethernet data signals into one of broadband over power line "BPL", X10, power line communications "PLC" and symmetrical hi-broadband BPL type signals for insertion into the electrical power distribution system, and wherein the second interface converts the BPL, X10, PLC or symmetrical hi-broadband BPL types signals from the vehicle's electrical power distribution system into Ethernet data signals for use by the selected vehicle system.

10. The control system of claim 9, wherein the first and second interfaces are each respectively adapted to convert Ethernet data signaling into one of BPL type signaling, X10 type signaling, automotive-style PLC and symmetrical hi-broadband BPL type signaling for insertion into the electrical power distribution system, and to convert the BPL, X10, automotive-style PLC or symmetrical hi-broadband BPL type signaling from the power distribution system into Ethernet data signaling for use by an associated component of the selected vehicle system.

11. The control system of claim 1, wherein the vehicle is a passenger aircraft (300) and wherein the power distribution system supplies electrical power and out-of-band communications to each passenger seat.

12. The control system of claim 11, wherein the vehicle is a passenger aircraft, and wherein each first and second interface associated with each passenger seat for at least one of data and voice communications over the electrical power distribution system of the passenger aircraft.

13. A method (200) for transmitting electrical power and communications over a vehicle's (300) electrical power distribution system (102, 304) for supplying electrical power to a plurality of different systems onboard the vehicle, the method comprising:
generating (202) a signal for transmission to a selected vehicle system in the plurality of different vehicle systems;
converting (204) the signal to a converted signal in a format for transmission over the vehicle's electrical power distribution system on a control channel associated with the selected vehicle system;
inserting (206) the converted signal on a power line of the electrical power distribution system; and
receiving (208) the converted signal at the selected vehicle system via the power line, **characterized in that** a control signal is transmitted on an out-of-band control channel associated with the selected vehicle system and communication data is transmitted on a communication channel over the electrical power distribution system, wherein the out-of-band control channel and communication channel are separate channels; the method **characterized by** further comprising:
using a system controller, performing functions to control out-of-band communications over the electrical power distribution system, wherein the out-of-band control channel operates at frequencies that prevent access via any links or means not associated with the vehicle.

14. The method of claim 13, further comprising:
extracting (210) the received signal from the power line at the selected vehicle system; and
converting (210) the received signal to another format for use by the vehicle system.

15. The method of claim 13, further comprising supplying communications and electrical power to each passenger seat in the vehicle over the vehicle's electrical power distribution system.

16. The method of claim 13, wherein converting the signal to a converted signal in a format for transmission over the vehicle's electrical power distribution system comprises converting the signal for out-of band secure communications.

17. The method of claim 13, wherein converting the signal to a converted signal in a format for transmission over the vehicle's electrical power distribution system comprises converting the signal to one of a broadband over power line "BPL" type signal, an X10 type signal, an automotive-style power line communications "PLC" type signal and a hi-broadband BPL type signal.

## Patentansprüche

1. Steuerungssystem (104, 310) zum Steuern eines Systems (100, 302) eines Fahrzeugs (300), das umfasst:
ein elektrisches Energieverteilungssystem (102, 304) zum Zuführen von elektrischer Energie zu einer Mehrzahl von verschiedenen Systemen an Bord des Fahrzeugs;
eine erste Schnittstelle (108, 312) zum Umwandeln eines Signals für Steuerung eines ausgewählten Fahrzeugsystems (110, 306) und/oder Kommunikation mit dem ausgewählten Fahrzeugsystem (110, 306) aus der Mehrzahl von verschiedenen Systemen an Bord des Fahrzeugs in ein Format zum Einspeisen und Übertragen über eine Stromleitung, die auch elektrische Energie an das ausgewählte Fahrzeugsystem (106, 308) liefert,
wobei die Stromleitung einen Teil des elektrischen Energieverteilungssystems des Fahrzeugs bildet; und
eine zweite Schnittstelle (114, 316) zum Umwandeln eines über die Stromleitung empfangenen Signals in ein Format zur Verwendung durch das ausgewählte Fahrzeugsystem; wobei von der ersten und der zweiten Schnittstelle jede angepasst ist, um das Signal über einen dem ausgewählten Fahrzeugsystem zugeordneten, von einem Kommunikationskanal getrennten Out-of-Band-Steuerungskanal bereitzustellen; wobei das Steuerungssystem **dadurch gekennzeichnet ist, dass** es ferner umfasst:
eine Systemsteuerung (118) für Out-of-Band-Steuerungskanalkommunikation über das elektrische Energieverteilungssystem, wobei die Systemsteuerung eingerichtet ist, um Funktionen zum Steuern der Out-of-Band-Steuerungskanalkommunikation über das elektrische Energieverteilungssystem auszuführen; wobei der Out-of-Band-Steuerungskanal mit Frequenzen arbeitet, die den Zugriff über jegliche nicht mit dem Fahrzeug verknüpfte Verbindungen oder Mittel verhindern.

2. Steuerungssystem nach Anspruch 1, bei dem die erste Schnittstelle mit einer ersten Komponente (110, 306) des ausgewählten Fahrzeugsystems und die zweite Schnittstelle mit einer zweiten Komponente (106, 308) des ausgewählten Fahrzeugsystems verknüpft ist, um eine Kommunikation zwischen der ersten und zweiten Komponente des ausgewählten Fahrzeugsystems über das elektrische Energieverteilungssystem des Fahrzeugs zu ermöglichen, das auch jeder der Komponenten elektrische Energie liefert.

3. Steuerungssystem nach Anspruch 1, bei dem die erste Schnittstelle und die zweite Schnittstelle eine einzige bidirektionale Schnittstelle bilden und bei dem der Steuerungskanal ferner eine bidirektionale Schnittstelle umfasst, die mit jeder Komponente des ausgewählten Fahrzeugsystems verknüpft ist,
wobei die bidirektionale Schnittstelle eingerichtet ist, um sowohl Signale in ein Format zum Einspeisen und Übertragen über das elektrische Energieverteilungssystem des Fahrzeugs umzuwandeln als auch über das elektrische Energieverteilungssystem des Fahrzeugs empfangene Signale zur Verwendung durch die Komponente des ausgewählten Fahrzeugsystems umzuwandeln.

4. Steuerungssystem nach Anspruch 1, bei dem das elektrische Energieverteilungssystem gleichzeitig elektrische Energie und Steuer- oder Kommunikationssignale an das ausgewählte Fahrzeugsystem bereitstellt.

5. Steuerungssystem nach Anspruch 1, bei dem das elektrische Energieverteilungssystem gleichzeitig elektrische Leistung und Steuerungs- oder Kommunikationssignalisierung zwischen Komponenten des ausgewählten Fahrzeugsystems bereitstellt.

6. Steuerungssystem nach Anspruch 1, ferner umfassend eine Überbrückungsverbindung (112, 314, 116, 318), die mit jeder Schnittstelle verknüpft ist, um jede Schnittstelle (108, 312, 114, 316) physikalisch mit dem elektrischen Energieverteilungssystem zu verbinden.

7. Steuerungssystem nach Anspruch 1, worin die Funktionen Folgendes beinhalten:
Fehlererkennung und -meldung,
Systemüberwachung; und
Stoppen und Starten der Datenübertragung.

8. Steuerungssystem nach Anspruch 1, ferner mit einer Steuerung (110, 306) zum Steuern der Datenübertragung über das elektrische Energieverteilungssystem.

9. Steuerungssystem nach Anspruch 1, bei dem die erste Schnittstelle Ethernet-Datensignale zur Einspeisung in das elektrische Energieverteilungssystem in eines von Breitband über Stromleitung "BPL", X10, Stromleitungskommunikation "PLC" und symmetrische hochbreitbandige BPL-Signale umwandelt, und bei dem die zweite Schnittstelle die Signale vom Typ BPL, X10, PLC oder symmetrischen hochbreitbandigen BPL-Signale vom elektrischen Energieverteilungssystem des Fahrzeugs in Ethernet-Datensignale zur Verwendung durch das ausgewählte Fahrzeugsystem umwandelt.

10. Steuerungssystem nach Anspruch 9, bei dem die erste und zweite Schnittstelle jeweils eingerichtet sind, um Ethernet-Datensignalisierung zur Einspeisung in das elektrische Energieverteilungssystem in eine der folgenden Signalisierungen umzuwandeln: BPL-Signalisierung, X10-Signalisierung, Automotive-PLC-Signalisierung und symmetrische hochbreitbandige BPL-Signalisierung, bzw. um die BPL-Signalisierung, X10-Signalisierung, Automotive-PLC-Signalisierung oder symmetrische hochbreitbandige BPL-Signalisierung vom Energieverteilungssystem zur Verwendung durch eine verknüpfte Komponente des ausgewählten Fahrzeugsystems in Ethernet-Datensignalisierung umzuwandeln.

11. Steuerungssystem nach Anspruch 1, bei dem das Fahrzeug ein Passagierflugzeug (300) ist und bei dem das Energieverteilungssystem an jedem Passagiersitz elektrische Energie und Out-of-Band-Kommunikation bereitstellt.

12. Steuerungssystem nach Anspruch 11, bei dem das Fahrzeug ein Passagierflugzeug ist, und bei dem jede erste und zweite Schnittstelle jedem Passagiersitz für Daten- und/oder Sprachkommunikation über das elektrische Energieverteilungssystem des Passagierflugzeugs zugeordnet ist.

13. Verfahren (200) zum Übertragen von elektrischer Energie und Kommunikation über das elektrische Energieverteilungssystem (102, 304) eines Fahrzeugs (300), um einer Mehrzahl von verschiedenen Systemen an Bord des Fahrzeugs elektrische Energie zuzuführen, wobei das Verfahren umfasst:
Erzeugen (202) eines Signals zur Übertragung an ein aus der Mehrzahl der verschiedenen Fahrzeugsysteme ausgewähltes Fahrzeugsystem;
Umwandeln (204) des Signals in ein umgewandeltes Signal in einem Format zur Übertragung über das elektrische Energieverteilungssystem des Fahrzeugs auf einem dem ausgewählten Fahrzeugsystem zugeordneten Steuerungskanal;
Einspeisen (206) des umgewandelten Signals in eine Stromleitung des elektrischen Energieverteilungssystems; und
Empfangen (208) des umgewandelten Signals am ausgewählten Fahrzeugsystem über die Stromleitung, **dadurch gekennzeichnet, dass** ein Steuersignal auf einem dem ausgewählten Fahrzeugsystem zugeordneten Out-of-Band-Steuerkanal und Kommunikationsdaten auf einem Kommunikationskanal über das elektrische Energieverteilungssystem übertragen werden,
wobei der Out-of-Band-Steuerkanal und der Kommunikationskanal getrennte Kanäle sind; wobei das Verfahren **dadurch gekennzeichnet ist, dass** es ferner umfasst:
Verwenden einer Systemsteuerung, die Funktionen zum Steuern von Out-of-Band-Kommunikation über das elektrische Energieverteilungssystem ausführt, wobei der Out-of-Band-Steuerkanal mit Frequenzen arbeitet, die den Zugriff über alle Verbindungen oder Mittel verhindern, die nicht mit dem Fahrzeug verknüpft sind.

14. Verfahren nach Anspruch 13, ferner umfassend:
Extrahieren (210) des empfangenen Signals aus der Stromleitung an dem ausgewählten Fahrzeugsystem; und
Umwandeln (210) des empfangenen Signals in ein anderes Format zur Verwendung durch das Fahrzeugsystem.

15. Verfahren nach Anspruch 13, ferner umfassend das Bereitstellen von Kommunikation und elektrischer Energie für jeden Passagiersitz in dem Fahrzeug über das elektrische Energieverteilungssystem des Fahrzeugs.

16. Verfahren nach Anspruch 13, bei dem das Umwandeln des Signals in ein umgewandeltes Signal in einem Format zur Übertragung über das elektrische Energieverteilungssystem des Fahrzeugs die Umwandlung des Signals für eine sichere Out-of-Band-Kommunikation umfasst.

17. Verfahren nach Anspruch 13, wobei das Umwandeln des Signals in ein umgewandeltes Signal in einem Format zur Übertragung über das elektrische Energieverteilungssystem des Fahrzeugs das Umwandeln des Signals in ein Breitband-über-Stromleitung-Signal "BPL", ein X10-Signal, ein Automotive-Stromleitungskommunikationssignal "PLC" oder ein hochbreitbandiges Signal vom BPL-Typ umfasst.

## Revendications

1. Système de commande (104, 310) pour commander un système (100, 302) d'un véhicule (300), comprenant :
un système de distribution de puissance électrique (102, 304) pour fournir la puissance électrique à une pluralité de systèmes différents à bord du véhicule ;
une première interface (108, 312) pour convertir un signal pour l'une d'une commande ou d'une communication avec un système de véhicule sélectionné (110, 306) de la pluralité de systèmes différents à bord du véhicule en un format pour une insertion et une transmission sur une ligne de puissance qui fournit également la puissance électrique au système de véhicule sélectionné (106, 308), dans lequel la ligne de puissance forme une partie du système de distribution de puissance électrique du véhicule ; et
une deuxième interface (114, 316) pour convertir un signal reçu sur la ligne de puissance en un format pour une utilisation par le système de véhicule sélectionné ; dans lequel chacune des première et deuxième interfaces est conçue pour fournir le signal sur un canal de commande hors bande associé au système de véhicule sélectionné qui est séparé à un canal de communication ; le système de commande étant **caractérisé en ce qu'**il comprend en outre :
un contrôleur de système (118) pour des communications de canal de commande hors bande par l'intermédiaire du système de distribution de puissance électrique, le contrôleur de système étant agencé pour effectuer des fonctions pour commander les communications de canal de commande hors bande sur le système de distribution de puissance électrique ; dans lequel le canal de commande hors bande fonctionne à des fréquences qui évitent un accès par l'intermédiaire de liaisons ou de moyens qui ne sont pas associés au véhicule.

2. Système de commande selon la revendication 1, dans lequel la première interface est associée à un premier composant (110, 306) du système de véhicule sélectionné et la deuxième interface est associée à un deuxième composant (106, 308) du système de véhicule sélectionné pour permettre des communications entre les premier et deuxième composants du système de véhicule sélectionné sur le système de distribution de puissance électrique du véhicule qui fournit également la puissance électrique à chacun des composants.

3. Système de commande selon la revendication 1, dans lequel la première interface et la deuxième interface forment une interface bidirectionnelle unique et dans lequel le canal de commande comprend en outre une interface bidirectionnelle associée à chaque composant du système de véhicule sélectionné, dans lequel l'interface bidirectionnelle est conçue à la fois pour convertir les signaux en un format pour une insertion et une transmission sur le système de distribution de puissance électrique du véhicule et pour convertir les signaux reçus sur le système de distribution de puissance électrique du véhicule pour une utilisation par le composant du système de véhicule sélectionné.

4. Système de commande selon la revendication 1, dans lequel le système de distribution de puissance électrique fournit simultanément la puissance électrique et la signalisation de commande ou de communication au système de véhicule sélectionné.

5. Système de commande selon la revendication 1, dans lequel le système de distribution de puissance électrique fournit simultanément la puissance électrique et la signalisation de commande ou de communication entre les composants du système de véhicule sélectionné.

6. Système de commande selon la revendication 1, comprenant en outre une liaison de pontage (112, 314, 116, 318) associée à chaque interface pour connecter physiquement chaque interface (108, 312, 114, 316) au système de distribution de puissance électrique.

7. Système de commande selon la revendication 1, dans lequel les fonctions comprennent :
la détection et l'annonce des défauts ;
la surveillance du système ; et
l'arrêt et le démarrage de la transmission de données.

8. Système de commande selon la revendication 1, comprenant en outre un contrôleur (110, 306) pour commander la transmission de données sur le système de distribution de puissance électrique.

9. Système de commande selon la revendication 1, dans lequel la première interface convertit les signaux de données Ethernet en l'un de signaux de type BPL (large bande sur ligne de puissance), X10, PLC (communication sur ligne de puissance), et BPL à haute large bande symétrique, et dans lequel la deuxième interface convertit les signaux de type BPL, X10, PLC ou BPL à haute large bande symétrique provenant du système de distribution de puissance électrique du véhicule en des signaux de données Ethernet pour une utilisation par le système de véhicule sélectionné.

10. Système de commande selon la revendication 9, dans lequel les première et deuxième interfaces sont conçues chacune respectivement pour convertir la signalisation de données Ethernet en l'une d'une signalisation de type BPL, d'une signalisation de type X10, d'une signalisation de type PLC de style automobile et d'une signalisation de type BPL à haute large bande symétrique pour une insertion dans le système de distribution de puissance électrique, et pour convertir la signalisation de type BPL, X10, PLC de style automobile ou BPL à haute large bande symétrique provenant du système de distribution de puissance en une signalisation de données Ethernet pour une utilisation par un composant associé du système de véhicule sélectionné.

11. Système de commande selon la revendication 1, dans lequel le véhicule est un avion de transport de passagers (300) et dans lequel le système de distribution de puissance fournit la puissance électrique et les communications hors bande à chaque siège de passager.

12. Système de commande selon la revendication 11, dans lequel le véhicule est un avion de transport de passagers, et dans lequel chacune des première et deuxième interfaces est associée à chaque siège de passager pour au moins l'une de communications de données et vocales sur le système de distribution de puissance électrique de l'avion de transport de passagers.

13. Procédé (200) pour transmettre la puissance électrique et les communications sur un système de distribution de puissance électrique (102, 304) d'un véhicule (300) pour fournir la puissance électrique à une pluralité de systèmes différents à bord du véhicule, le procédé comprenant :
la génération (202) d'un signal pour une transmission à un système de véhicule sélectionné dans la pluralité de systèmes de véhicule différents ;
la conversion (204) du signal en un signal converti en un format pour une transmission sur le système de distribution de puissance électrique du véhicule sur un canal de commande associé au système de véhicule sélectionné ;
l'insertion (206) du signal converti sur une ligne de puissance du système de distribution de puissance électrique ; et
la réception (208) du signal converti au niveau du système de véhicule sélectionné par l'intermédiaire de la ligne de puissance, **caractérisé en ce qu'**un signal de commande est transmis sur un canal de commande hors bande associé au système de véhicule sélectionné et les données de communication sont transmises sur un canal de communication sur le système de distribution de puissance électrique, dans lequel le canal de commande hors bande et le canal de communication sont des canaux séparés ; le procédé étant **caractérisé en ce qu'**il comprend en outre :
l'utilisation d'un contrôleur de système, effectuant des fonctions pour commander les communications hors bande sur le système de distribution de puissance électrique, dans lequel le canal de commande hors bande fonctionne à des fréquences qui évitent un accès par l'intermédiaire de liaisons ou de moyens qui ne sont pas associés au véhicule.

14. Procédé selon la revendication 13, comprenant en outre :
l'extraction (210) du signal reçu de la ligne de puissance au niveau du système de véhicule sélectionné ; et
la conversion (210) du signal reçu en un autre format pour une utilisation par le système de véhicule.

15. Procédé selon la revendication 13, comprenant en outre la fourniture des communications et de la puissance électrique à chaque siège de passager dans le véhicule sur le système de distribution de puissance électrique du véhicule.

16. Procédé selon la revendication 13, dans lequel la conversion du signal en un signal converti en un format pour une transmission sur le système de distribution de puissance électrique du véhicule comprend la conversion du signal pour des communications sécurisées hors bande.

17. Procédé selon la revendication 13, dans lequel la conversion du signal en un signal converti en un format pour une transmission sur le système de distribution de puissance électrique du véhicule comprend la conversion du signal en l'un d'un signal de type BPL (large bande sur ligne de puissance), d'un signal de type X10, d'un signal de type PLC (communications sur ligne de puissance), de style automobile et d'un signal de type BPL à haute large bande.
